# EUROPÄISCHE PATENTSCHRIFT

(11) **EP 0 602 553 B1**
(45) Veröffentlichungstag und Bekanntmachung des Hinweises auf die Patenterteilung: **16.04.1997**
(21) Anmeldenummer: 93119891.5
(22) Anmeldetag: 09.12.1993
(51) Int. Cl.: B65D 51/22, B65D 43/08

(54) **Mehrwegfass aus Kunststoff und Verfahren zu dessen Herstellung und Rekonditionierung**
Multi-way plastic kep and procedure of fabrication and reconditioning
Tonneau à usages multiples en matière plastique et procédé pour sa fabrication et son reconditionnement

(30) Priorität: 16.12.1992 DE 4242370
(43) Veröffentlichungstag der Anmeldung: 22.06.1994
(73) Patentinhaber: Schütz-Werke GmbH & Co. KG., D-56242 Selters (DE)
(72) Erfinder: Schütz, Udo, D-56242 Selters / Ww (DE)
(74) Vertreter: Pürckhauer, Rolf, Dipl.-Ing.

(56) Entgegenhaltungen:
- EP-A- 0 424 897
- CH-A- 656 365
- DE-A- 2 544 491
- DE-A- 3 908 099
- DE-A- 3 937 613

## Beschreibung

Die Erfindung betrifft Mehrwegfässer aus Kunststoff mit einem blasgeformten Faßkörper, der eine mit Abstand unterhalb der Faßöffnung von der Faßwand radial nach außen vorstehende, massive Bordur aufweist, sowie mit einem spritzgegossenen Kunststoffdeckel mit einem den Faßhals umschließenden Außenrand und einem in den Faßhals eintauchenden, über den Deckelboden unterhalb der Faßöffnung vorstehenden Innenrand und mit einem zwischen Deckelaußenrand und Deckelinnenrand eingelegten Dichtring, der durch einen Deckelverschluß gegen den Öffnungsrand des Faßhalses angepreßt wird (DE 39 37 613 A1).

Die strengen gesetzlichen Umweltschutzvorschriften erfordern den Übergang von Einweg- auf Mehrweggebinde wie beispielsweise Fässer aus Kunststoff oder Stahl, die Umstellung auf Gebinde mit größerem Volumen mit dem Ziel einer Verringerung der Restmengen und die Entwicklung neuer Mehrweggebinde, die im Hinblick auf eine Entlastung der Umwelt von schädlichen Stoffen rekonditioniert und für die Rekonditionierung sowie für eine ordnungsgemäße Entsorgung durch eine schadstofffreie Vernichtung z.B. durch Verbrennen oder für eine Wiederaufbereitung des Herstellungsmaterials optimal restentleert und leicht gereinigt werden können.

Die Entwicklung von rekonditionierbaren und entsorgungsfreundlichen, gegen eine Kontaminierung durch Schadstoffe geschützten Hartgebinden, im wesentlichen Fässern aus Kunststoff und Stahl, führte zu den gattungsgemäßen Deckelfässern und z.B. aus der DE 35 39 656 A1 bekannten Deckelspundfässern, die zum Teil die bisher eingesetzten geschlossenen Spundfässer ersetzen. Diese Fässer werden nach Bedarf mit einer als Inliner bezeichneten flexiblen Innenhülle bzw. einem Sack aus einer Kunststoffolie, z.B. einer Polyethylenfolie, oder aus einer diffusionsfesten, koextrudierten Metall-Kunststoffverbundfolie, z.B. einer beidseitig mit Polyethylen kaschierten Aluminiumfolie ausgestattet. Fässer mit einem Inliner sind z.B. aus der DE 88 10 760 U1 bekannt. Die Inliner finden bei Kunststoff- und Stahlfässern Anwendung, wenn in diese entsorgungsproblematische Produkte wie Dispersionen, z.B. Farben, gefüllt werden, die nach dem Trocknen kaum mehr von der Faßwand zu entfernen sind. Inliner aus einer diffusionsfesten Verbundfolie unterbinden bei Kunststoffässern die Diffusion von lösungsmittelhaltigem Füllgut in die Faßwand und eine mögliche Rückdiffusion von Lösungsmitteln aus der Faßwand. Bei Stahlfässern erspart der Inliner die bisher zum Schutz des Stahlblechs gegen aggressive Medien und Korrosion erforderliche Innenlackierung.

Der Erfindung liegt die Aufgabe zugrunde, ein Mehrwegfaß zu entwickeln, das nach einer Verwendung als geschlossenes Spundfaß kostengünstig zu einem Weithals-Deckelfaß oder erneut als Spundfaß rekonditioniert werden kann.

Diese Aufgabe ist erfindungsgemäß gelöst durch ein Kunststoff-Mehrwegfaß mit den Merkmalen des Patentanspruches 1 sowie die Herstellungs- und Rekonditionierverfahren nach den Patentansprüchen 4 und 6.

Die Kombination eines blasgeformten Weithalsfaßkörpers mit einem durch Preßschweißen oder Umspritzen auf diesem befestigten, spritzgegossenen Spunddeckel eröffnet die Möglichkeit zur kostengünstigen Herstellung von den höchsten Sicherheitsanforderungen für flüssiges Gefahrengut genügenden Spundfässern, die durch eine preiswerte Rekonditionierung zu Weithalsfässern mit abnehmbarem einfachem Deckel oder Spunddeckeln mit einem Spannringverschluß für den Transport und die Lagerung von flüssigen, granulat- und pulverförmigen Gütern, die in niedrigere Gefahrenklassen eingestuft sind, umgerüstet werden können.

Das Mehrweg-Kunststoffaß und die Verfahren zu dessen Herstellung und Rekonditionierung nach der Erfindung sind nachfolgend anhand von Zeichnungen erläutert. Es zeigt
- Fig. 1: eine ausschnittsweise Schnittdarstellung des Deckelbereiches einer ersten Ausführungsform eines Spundfasses mit einem durch Preßschweißung befestigten Spunddeckel,
- Fig. 2: eine der Fig. 1 entsprechende Darstellung des Deckelbereiches mit einem Heizspiegel zur Vorbereitung einer Preßschweißung,
- Fig. 3: eine ausschnittsweise Schnittdarstellung des Deckelbereiches einer zweiten Ausführungsform eines Spundfasses, das mit einem aus Kunststoff spritzgegossenen Verschlußring ausgestattet ist, und
- Fig. 4: eine ausschnittsweise Schnittdarstellung des Deckelbereiches eines von einem Spundfaß nach dem Abtrennen des Spunddeckels zu einem Weithals-Deckelfaß umgerüsteten Fasses.

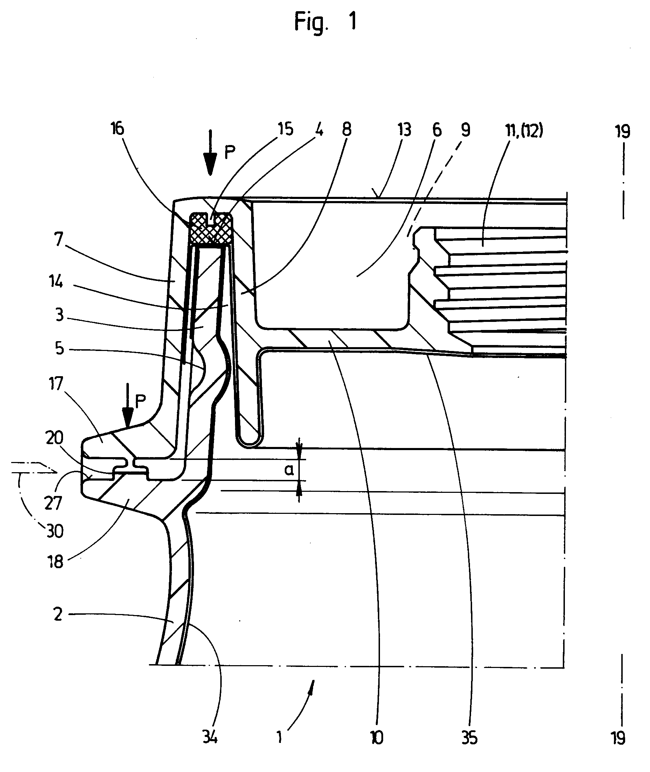

Das Spundfaß 1 aus thermoplastischem Kunststoff, z.B. Polyethylen, nach Fig. 1, das als Mehrwegfaß zum Einsatz kommt, weist einen blasgeformten Weithalsfaßkörper 2 mit einem Faßhals 3 auf, in den im Abstand vom Öffnungsrand 4 über den Umfang verteilte Sicken 5 zur Versteifung des Faßhalses 3 und Abstützung eines aus Kunststoff spritzgegossenen Spunddeckels 6 eingeformt sind. Der Spunddeckel 6 besitzt einen den Faßhals 3 umschließenden Außenrand 7 und einen in den Faßhals 3 eintauchenden Innenrand 8, der über den unterhalb der Faßöffnung 9 gelegenen Deckelboden 10 vorsteht. Der Spunddeckel 6 taucht mit seinem Boden 10 so tief in den Faßhals 3 ein, daß der Einfüll- und Entnahmespund 11 und der Be- und Entlüftungsspund 12, die am Deckelboden 10 angeformt sind, unterhalb der Ebene des oberen Deckelrandes 13 enden. Deckelaußenrand 7 und Deckelinnenrand 8 bilden einen Ringraum 14, von dessen Grund ein Ringansatz 15 axial vorsteht. Der Ringansatz 15 ist mit einer Zweikomponenten-Dichtungsmasse, z.B. Polyurethan mit Härter, umgespritzt, die einen Dichtring 16 bildet.

Unten am Außenrand 7 des spritzgegossenen Spunddeckels 6 ist ein umlaufender Flansch 17 und an den blasgeformten Faßkörper 2 eine mit Abstand unterhalb der Faßöffnung 9 radial nach außen vorstehende, massive Bordur 18 angeformt.

Deckelflansch 17 und Faßbordur 18, die bei geschlossenem Deckel 6 einen Abstand a aufweisen, sind durch einen zur Faßachse 19-19 koaxialen, umlaufenden Verschlußsteg 20 miteinander verschweißt.

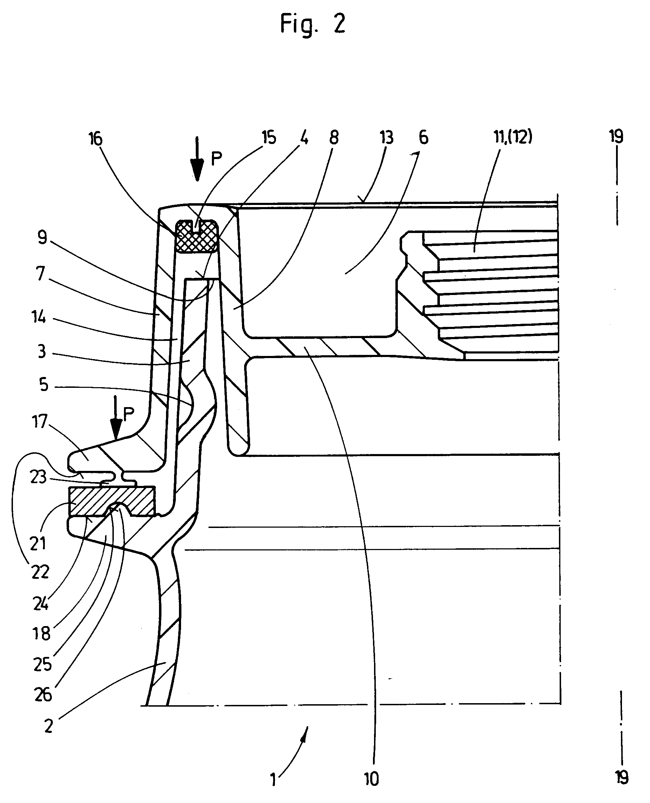

Zur Herstellung des Spundfasses 1 nach Fig. 1 wird gemäß Fig. 2 auf die Bordur 18 des Faßkörpers 2 von oben ein umlaufender Heizspiegel 21 und auf den Heizspiegel der Spunddeckel 6 mit einem an der Unterseite 22 des Deckelflansches 17 angeformten, zur Deckel- bzw. Faßachse 19-19 koaxialen Ringansatz 23 mit einer bestimmten Druckkraft P aufgesetzt. In die Unterseite 24 des Heizspiegels 21 ist eine umlaufende Ringnut 25 eingeformt. Während einer Aufheizperiode steigt in die Ringnut 25 des Heizspiegels 21 geschmolzenes Kunststoffmaterial der Faßbordur 18 infolge des auf den Heizspiegel 21 wirkenden Druckes und bildet einen umlaufenden, dem Ringansatz 23 gegenüberliegenden Ringwülst 26, und der am Deckelflansch 17 angeformte Ringansatz 23 wird angeschmolzen. Nach der Aufheizperiode werden der Spunddeckel 6 und der Heizspiegel 21 von dem Faßkörper 2 abgehoben, und anschließend wird der Deckel 6 mit dem Ringansatz 23 unter Druck und Vorspannung der Deckeldichtung 16 auf die Faßbordur 18 aufgesetzt, derart, daß der Ringansatz 23 an der Unterseite 22 des Deckelflansches 17 mit dem Ringwulst 26 auf der Oberseite 27 der Faßbordur 18 zu einem Deckelflansch 17 und Faßbordur 18 miteinander verbindenden, ringförmigen Verschlußsteg 20 verschweißt.

In Abänderung des beschriebenen Herstellungsverfahrens kann der Ringwulst 26 an die Faßbordur 18 angeblasen werden.

Ferner besteht die Möglichkeit, den Deckelflansch 17 und die Faßbordur 18 lediglich über den Ringansatz 23 miteinander zu verschweißen.

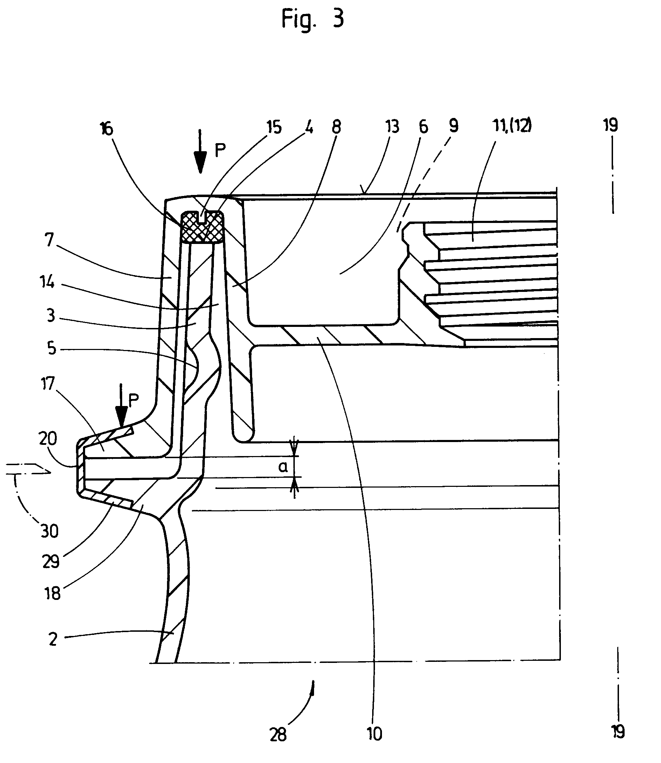

Zur Herstellung des Spundfasses 28 nach Fig. 3 wird auf den Faßhals 3 ein Spunddeckel 6 mit einer Druckkraft P und unter Vorspannung der Deckeldichtung 16 aufgesetzt, und Deckelflansch 17 und Faßbordur 18, die mit einem Abstand a übereinander angeordnet sind, werden mit einem Verschlußring 29 aus Kunststoff umspritzt, der einen Deckelflansch 17 und Faßbordur 18 miteinander verbindenden, ringförmigen Verschlußsteg 20 bildet. Das Kunststoffmaterial für den Verschlußring 29 wird am günstigsten - tangential in ein entsprechendes Spritzgießwerkzeug eingespritzt.

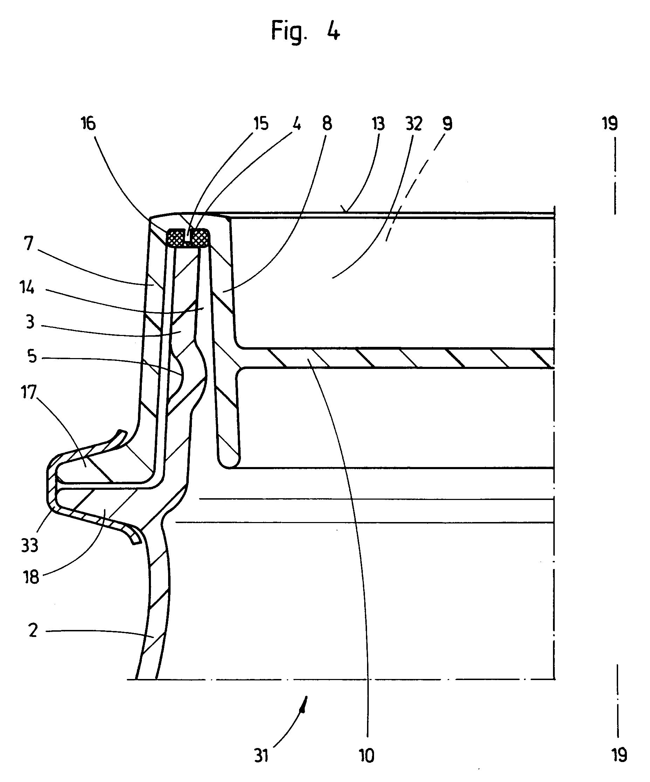

Nach anfänglichem oder mehrfachem Gebrauch wird zur Rekonditionierung der Spundfässer 1, 28 nach den Fign. 1 und 3 der Spunddeckel 6 durch Herausnehmen des Verschlußsteges 20 durch ein oder mehrere Messer 30 einer Schneidmaschine, Formdrehmeißel, eine Säge oder dgl. von dem Weithalsfaßkörper 2 getrennt. Der Faßkörper 2 kann dann zu einem Weithalsfaß 31 mit einem einfachen Deckel 32 und einem Spannringverschluß 33 aus Blech gemäß Fig. 4 umgerüstet oder als Deckelspundfaß oder als Spundfaß mit einem aufgeschweißten oder angespritzten Spunddeckel ausgerüstet werden.

Die Spundfässer 1, 28 nach den Fign. 1 und 3 sowie das Weithals-Deckelfaß 31 nach Fig. 4 können mit einem auch als Inliner bezeichneten Foliensack 34 aus einer Kunststoffolie oder einer Metall-Kunststoffverbundfolie ausgestattet sein. Dieser bei dem Spundfaß 1 nach Fig. 1 dargestellte Foliensack 34 wird vor dem Aufschweißen bzw. Aufspritzen eines Spunddeckels 6 und vor dem Aufsetzen eines Weithalsfaßdeckels 32 auf den Faßhals 3 in den Faßkörper 2 eingelegt und über den Öffnungsrand 4 gezogen, so daß er zwischen diesem und der Deckeldichtung 16 eingeklemmt wird. Zusätzlich kann der Foliensack 34 stellenweise an der Innenwand des Faßkörpers 2 mit einem Kleber oder durch Thermoschweißung angeheftet werden.

Schließlich kann der Spunddeckel 6 der Spundfässer 1, 28 nach den Fig. 1 und 3 sowie der Deckel 32 des Weithalsfasses 31 nach Fig. 4 mit einer Innenauskleidung 35 aus einer Kunststoffolie oder einer Metall-Kunststoffverbundfolie ausgestattet sein, die 35 bei dem Spundfaß 1 nach Fig. 1 dargestellt ist.

## Patentansprüche

1. Mehrwegfaß aus Kunststoff, mit einem blasgeformten Faßkörper (2), der eine mit Abstand unterhalb der Faßöffnung von der Faßwand radial nach außen vorstehende, massive Bordur (18) aufweist, sowie mit einem spritzgegossenen Kunststoffdeckel (6) mit einem den Faßhals (3) umschließenden Außenrand (4) und einem in den Faßhals eintauchenden, über den Deckelboden unterhalb der Faßöffnung (9) vorstehenden Innenrand (8) und mit einem zwischen Deckelaußenrand (7) und Deckelinnenrand (8) angeordneten Dichtring (16), der durch einen Deckelverschluß gegen den Öffnungsrand (4) des Faßhalses (3) angepreßt wird, dadurch gekennzeichnet, daß dieses für den anfänglichen Gebrauch als Spundfaß (1, 28) mit einem Spunddeckel (6) ausgerüstet ist, der einen Einfüll- und Entnahmespund (11) sowie einen Be- und Entlüftungsspund (12) aufweist, und Deckelflansch (17) und Faßbordur (18), die bei geschlossenem Deckel (6) einen Abstand (a) aufweisen, durch einen zur Faßachse (19-19) koaxialen, umlaufenden Verschlußsteg (20) miteinander verschweißt sind und daß das für den weiteren Gebrauch durch Heraustrennen des Verschlußsteges (20) rekonditionierte Faß als Weithalsfaß (31) mit einem einfachen Deckel (32) mit Spannringverschluß (33) oder einem abnehmbaren Spunddeckel umrüstbar oder erneut als Spundfaß (28) mit einem auf den Faßkörper (2) durch einen Verschlußsteg (20) aufgeschweißten Spunddeckel (6) ausrüstbar ist.

2. Faß nach Anspruch 1, dadurch gekennzeichnet, daß dieses als Spundfaß (1, 28) und/oder als Weithalsfaß (31) mit abnehmbarem Deckel (32) mit einem Foliensack (34) aus einer Kunststoffolie oder einer Metall-Kunststoffverbundfolie ausgerüstet ist.

3. Faß nach Anspruch 1 und 2, dadurch gekennzeichnet, daß dieses als Spundfaß (1, 28) einen mit einem Verschlußsteg (20) aufgeschweißten Spunddeckel (6) und/oder als Weithalsfaß (31) einen abnehmbaren Deckel (32) mit einer Innenauskleidung (35) aus einer Kunststoffolie oder einer Metall-Kunststoffverbundfolie aufweist.

4. Verfahren zur Herstellung von Mehrwegfässern aus Kunststoff nach Anspruch 1 bis 3, dadurch gekennzeichnet, daß auf die Bordur (18) des Faßkörpers (2) von oben ein umlaufender Heizspiegel (21) und auf den Heizspiegel (21) ein Spunddeckel (6) mit einem an der Unterseite (22) des Deckelflansches (17) angeformten, zur Deckelachse koaxialen Ringansatz (23) unter Druck aufgesetzt wird und daß nach einer Aufheizperiode zum Anschmelzen des am Deckelflansch (17) angeordneten Ringansatzes (23) und des Oberflächenbereiches der Faßbordur (18) der Deckel (6) und der Heizspiegel (21) abgehoben werden und danach der Deckel (6) mit dem Ringansatz (23) unter Druck und Vorspannung der Deckeldichtung (16) auf die Faßbordur (18) aufgesetzt wird, derart, daß der Ringansatz (23) mit der Faßbordur (18) zu einem Deckelflansch (17) und Faßbordur (18) miteinander verbindenden, ringförmigen Verschlußsteg (20) verschweißt.

5. Verfahren nach Anspruch 4, dadurch gekennzeichnet, daß mittels eines unter Druck auf die Faßbordur (18) aufgesetzten Heizspiegels (21), in dessen Unterseite (24) eine umlaufende Ringnut (25) angeordnet ist, an die Oberseite (27) der Faßbordur (18) ein umlaufender Ringwulst (26) angeformt wird, der nach dem Entfernen des Heizspiegels (21) mit dem angeschmolzenen Ringansatz (23) an der Unterseite des Deckelflansches (17) des unter Druck auf die Faßbordur (18) aufgesetzten Spunddeckels (6) zu dem Verschlußsteg (20) zwischen Deckelflansch (17) und Faßbordur (18) verschweißt wird.

6. Verfahren zur Herstellung von Mehrwegfässern aus Kunststoff nach Anspruch 1 bis 3, dadurch gekennzeichnet, daß auf den Faßhals (3) ein Spunddeckel (6) unter Druck und Vorspannung der Deckeldichtung (16) aufgesetzt wird und Deckelflansch (17) und Faßbordur (18), die mit Abstand (a) übereinander angeordnet sind, mit einem Verschlußring (29) aus Kunststoff umspritzt werden, der einen Deckelflansch (17) und Faßbordur (18) miteinander verbindenden, ringförmigen Verschlußsteg (20) bildet.

## Claims

1. Multi-way plastic keg with a blow-moulded keg body (2), and having a solid rim (18) projecting radially outwards at a spacing from the keg wall, and with an injection-moulded plastic lid (6) with an outer edge (4) surrounding the keg neck (3), and an inner edge (8) penetrating into the keg neck and projecting over the base of the lid beneath the keg opening (9), said inner edge (8) having a seal ring (16) disposed between the lid outer edge (7) and lid inner edge (8), and being pressed by a lid closure against the opening edge (4) of the keg neck (3), characterised in that the latter, for initial use as a bung keg (1, 28) is fitted with a bung lid (6) which has a filling- and removal bung (11) and a ventilation and evacuation bung (12), and a lid flange (17) and a keg rim (18) which, when the lid (6) is closed, are at a spacing (a) apart, are welded together by a surrounding closure web (20) coaxial with the keg axis (19-19), and in that the keg, reconditioned for further use by separation of the closure web (20), may be refitted as a wide-neck keg (31) with a single lid (32) with a clamp ring closure (33) or a removable bung lid, or may again be refitted as a bung keg (28) with a bung lid (6) welded on to the keg body (2) by a closure web (20).

2. Keg according to claim 1, characterised in that it is fitted as a bung keg (1, 28) and/or as a wide-neck keg (31) with a removable lid (32), with a film bag (34) made of a plastic film or a metal-plastic compound film.

3. Keg according to claim 1 and 2, characterised in that it has, as a bung keg (1, 28) a bung lid (6) welded on with a closure web (20) and/or, as a wide-neck keg (31), a removable lid (32) with an inner lining (35) made of a plastic film or a metal-plastic compound film.

4. Method of manufacturing plastic multi-way kegs according to claims 1 to 3, characterised in that a rotating heating mirror (21) is placed from above under pressure on to the rim (18) of the keg body (2), and there is placed on the heating mirror (21) a bung lid (6) with a ring fitting (23) coaxial with the lid axis and integrally moulded on to the underside (22) of the lid flange (17), and in that, after a heating-up period to allow the ring fitting (23) disposed on the lid flange (17) and the surface area of the keg rim (18) to fuse together, the lid (6) and the heating mirror (21) are lifted off and thereafter the lid (6) with the ring fitting (23) is placed on the keg rim (18) under pressure and with initial tension of the lid seal (16), in such a way that the ring fitting (23) is welded to the keg rim (18) to form an annular closure web (20) connecting together the lid flange (17) and the keg rim (18).

5. Method according to claim 4, characterised in that, by means of a heating mirror (21) placed under pressure on to the keg rim (18) and having in its underside (24) a surrounding annular groove (25), a surrounding annular bead (26) is formed on the upper side (27) of the keg rim (18), said bead (26), after removal of the heating mirror (21), being welded, with the fused-on ring fitting (23) located on the underside of the lid flange (17) of the bung lid (6) placed under pressure on the keg rim (18), to the closure web (20) between lid flange (17) and keg rim (18).

6. Method of manufacturing multi-way plastic kegs according to claims 1 to 3, characterised in that a bung lid (6) is placed, under pressure and with initial tension of the lid seal (16), on to the keg neck (3), and the lid flange (17) and keg rim (18), which are disposed at a spacing (a) one above the other, have injected around them a closure ring (29) of plastic, which forms an annular closure web (20) connecting together the lid flange (17) and the keg rim (18).

## Revendications

1. Fût à usages multiples en matière plastique, comportant un corps (2) de fût formé par soufflage et ayant une collerette pleine (18), qui fait radialement saillie vers l'extérieur de la paroi du fût à une certaine distance au-dessous de l'ouverture de fût, ainsi qu'un couvercle (6) en matière plastique moulée par injection et ayant un bord extérieur (4) entourant le col (3) du fût et un bord intérieur (8) qui plonge dans le col du fût et qui va au-delà du fond du couvercle au-dessous de l'ouverture (9) du fût, et un anneau d'étanchéité (16) inséré entre le bord extérieur (7) du couvercle et le bord intérieur (8) du couvercle, qui est plaquée contre le bord (4) de l'ouverture du col (3) du fût par une fermeture de couvercle, caractérisé par le fait que ce fût, réalisé pour la première utilisation sous la forme d'un fût (1, 28) à bonde, est équipé d'un couvercle (6) de bonde qui comporte une bonde de remplissage et de prélèvement (11) ainsi qu'une bonde de mise à l'atmosphère et d'évacuation (12), et que la bride (17) du couvercle et la collerette (18) du fût, qui sont situées à une distance (a) lorsque le couvercle (6) est fermé, sont soudées ensemble par une barrette de fermeture circonférencielle (20) qui est coaxiale à l'axe (19-19) du fût, et que le fût, reconditionné pour une autre utilisation par le retrait de la barrette de fermeture (20), peut être transformé en un fût (31) à col large ayant un simple couvercle (32) comportant un anneau élastique de fermeture (33) ou un couvercle de bonde amovible, ou peut à nouveau être équipé comme fût (28) à bonde d'un couvercle (6) de bonde, qui est soudé sur le corps (2) du fût au moyen d'une barrette de fermeture (20).

2. Fût selon la revendication 1, caractérisé par le fait que celui-ci, réalisé sous la forme d'un fût (1, 28) à bonde et/ou d'un fût (31) à col large avec un couvercle (32) amovible, est équipé d'un sac (34) en un film de matière plastique ou en un film composite en matière plastique et en métal.

3. Fût selon les revendications 1 et 2, caractérisé par le fait que celui-ci, réalisé sous la forme d'un fût (1, 28) ayant un couvercle (6) de bonde qui est soudé au moyen d'une barrette de fermeture (20) et/ou sous la forme d'un fût (31) à col large avec un couvercle (32) amovible, comporte un revêtement intérieur (35) en un film de matière plastique ou un film composite en matière plastique et en métal.

4. Procédé destiné à la fabrication de fûts à usages multiples en matière plastique selon les revendications 1 à 3, caractérisé par le fait qu'un miroir chauffant circonférenciel (21) est placé à partir du haut sur la collerette (18) du corps (2) du fût, et qu'un couvercle (6), comportant un épaulement annulaire (23) qui est coaxial à l'axe du couvercle et qui est formé sur la partie inférieure (22) de la bride (17) du couvercle, est emmanché sous pression sur le miroir chauffant (21), et qu'à l'issue d'un temps de réchauffage qui est destiné à amener à un début de fusion l'épaulement annulaire (23) disposé sur la bride (17) du couvercle et la zone de surface de la collerette (18) du fût, le couvercle (6) et le miroir chauffant (21) sont retirés, et que le couvercle (6) avec l'épaulement annulaire (23) sont ensuite emmanchés sur la collerette (18) du fût, avec mise sous pression et sous précontrainte du joint (16) du couvercle, de telle sorte que l'épaulement annulaire (23) et la collerette (18) soient soudés ensemble et forment une barrette de fermeture annulaire (20) reliant la bride (17) du couvercle à la collerette (18) du fût.

5. Procédé selon la revendication 4, caractérisé par le fait que, au moyen d'un miroir chauffant (21) emmanché sous pression sur la collerette (18) du fût, dans la partie inférieure (24) duquel est ménagée une rainure annulaire circonférencielle (25), un bourrelet annulaire circonférenciel (26) est formé sur la partie supérieure (27) de la collerette (18) du fût qui, après le retrait du miroir chauffant (21), est soudé à l'épaulement annulaire (23) amené à un début de fusion de la partie inférieure de la bride (17) du couvercle (6) de bonde emmanché sous pression sur la collerette (18) du fût, pour constituer la barrette de fermeture (20) entre la bride (17) du couvercle et la collerette (18) du fût.

6. Procédé destiné à la fabrication de fûts à usages multiples en matière plastique selon les revendications 1 à 3, caractérisé par le fait qu'un couvercle (6) de bonde est emmanché sur le col (3) du fût, avec mise sous pression et sous précontrainte du joint (16) du couvercle, et que la bride (17) du couvercle et la collerette (18) du fût, qui sont disposées l'une au-dessus de l'autre à une distance (a), sont enrobées par pulvérisation d'un anneau de fermeture (29) en matière plastique, qui constitue une barrette de fermeture annulaire (20) reliant la bride (17) du couvercle à la collerette (18) du fût.
